# FASCICULE DE BREVET EUROPEEN

(11) **EP 1 771 062 B1**
(45) Date de publication et mention de la délivrance du brevet: **16.01.2008**
(21) Numéro de dépôt: 05783936.7
(22) Date de dépôt: 28.06.2005
(51) Int. Cl.: A01G 9/02

(54) **STRUCTURE POUR MUR VEGETALISE**
VORRICHTUNG ZUR ERRICHTUNG EINER BEPFLANZBAREN MAUER
STRUCTURE FOR VEGETATED WALL

(30) Priorité: 30.06.2004 FR 0407244
(43) Date de publication de la demande: 11.04.2007
(73) Titulaire: Canevaflor, 69008 Lyon (FR)
(72) Inventeur: PELESZEZAK, Pascal, F-69003 Lyon (FR)
(74) Mandataire: Bratel, Gérard
(86) Numéro de dépôt international: PCT/FR2005/001629
(87) Numéro de publication internationale: WO 2006/010846

(56) Documents cités:
- WO-A-97/28682
- DE-A1- 2 636 917
- FR-A- 2 731 874
- GB-A- 2 239 155
- US-A- 4 961 284
- US-A- 5 373 662

## Description

La présente invention concerne une structure pour mur végétalisé perfectionnée, pouvant avoir diverses fonctions et utilisations : embellissement urbain, écran anti-bruit ou anti-éblouissement, muret de séparation de chaussées ou pistes cyclables, palissade de chantier, barrière de sécurité pour piscine, etc.

D'une manière générale, il est déjà connu de réaliser des murs végétalisés, par exemple en bordure de chaussées, ou sur des pignons d'immeubles ou autres murs disgracieux à dissimuler.

On connaît un système de réalisation de murs végétalisés, qui consiste en des blocs de béton empilables formant des colonnes creuses et remplies de terre végétale. Comme on le comprend aisément, il s'agit d'une structure lourde, difficile à transporter et à installer, et dont les possibilités d'utilisation sont très limitées ; de plus, cette structure ne peut être végétalisée que sur une seule face. On connaît aussi un système qui utilise des panneaux superposés en laine de roche, dont la végétalisation nécessite toutefois l'ajout de "tapis" précultivés en serre, et stabilisés par un grillage.

Un autre système connu, pour la réalisation dé murs végétalisés, consiste en des « casiers » métalliques grillagés, et remplis d'un substrat de plantation tel que terreau, ces casiers possédant une forme prismatique et pouvant ainsi être juxtaposés et superposés, et assemblés entre eux, pour constituer une structure de mur de longueur et hauteur souhaitées. A titre d'exemples, il est fait ici référence au brevet US 4961284, au brevet US 5373662, à la demande de brevet français FR 2731874 et à la demande de brevet allemand DE 2636917.

D'une façon générale, les casiers divulgués par ces documents possèdent une face avant et/ou une face arrière grillagée, mais leurs quatre autres faces, soit les faces inférieure, supérieure et latérales, sont des faces pleines. Ainsi, le remplissage en terreau d'un ensembe de tels casiers est rendu difficile, et il en est de même pour le remplacement périodique du terreau, qui doit être renouvelé tous les deux à trois ans. De plus, la présence des faces inférieure, supérieure et latérales pleines rend problématique la mise en place, dans une telle structure de mur végétalisé, d'un réseau d'irrigation. Ainsi, dans le cas du brevet US 4961284 précité, seuls sont prévus quelques tubes perforés d'irrigation enfoncés dans le terreau, ces tubes n'étant raccordés à aucun réseau d'alimentation et assurant une circulation d'eau purement gravitaire, sans possibilité de distribution horizontale. Dans le cas du brevet US 5373662 précité, les tubes d'irrigation incorporés aux différents casiers superposés doivent être connectés entre eux au moyen de raccords et de manchons extérieurs, qui font saillie sur la face avant ou arrière de la structure, en « contournant » les obstacles constitués par les faces inférieure et supérieure pleines.

Par ailleurs, la plupart des structures de mur végétalisé actuelles de ce genre ne sont pas autoporteuses, et leurs casiers doivent être montés sur une ossature de support, comme le montrent les documents FR 2731876 et DE 2636917 précités. Dans ce cas, la structure ne peut être végétalisée que sur sa face avant, car sa face arrière est appliquée contre la structure porteuse.

La présente invention vise à éliminer ces inconvénients, en fournissant une structure de mur végétalisé légère, donc facile à transporter et à installer, et qui soit autoporteuse, de sorte qu'elle ne nécessite pas un mur-support ou une ossature de support et puisse ainsi trouver des applications plus diversifiées, cette structure pouvant en outre être équipée aisément d'un réseau complet d'irrigation, et permettant la végétalisation de ses deux faces.

A cet effet, l'invention a pour objet une structure pour mur végétalisé, du genre de celles composées de casiers de forme générale prismatique, prévus pour être juxtaposés et/ou superposés, les casiers adjacents étant assemblés entre eux, chaque casier possédant des faces grillagées ou maillées, et les casiers étant prévus pour être remplis d'un substrat de plantation, tel que terreau, cette structure de mur végétalisé étant caractérisée par le fait que les faces inférieure, supérieure et latérales de ses casiers sont ajourées, et en ce qu'elle reçoit un réseau de conduits d'eau, et le cas échéant aussi un réseau de drains d'air, qui s'étendent dans l'épaisseur des différents casiers juxtaposés et/ou superposés, donc à l'intérieur du substrat de plantation, en traversant les plans de joint horizontaux et/ou verticaux entre casiers adjacents.

Dans une forme de réalisation préférée de cette structure pour mur végétalisé, chaque casier possède un châssis supportant des faces grillagées ou maillées ou ajourées fixes, respectivement inférieure, supérieure, latérales et arrière, tandis que la face avant du casier est constituée par un cadre grillagé ou maillé amovible.

Ainsi, l'invention propose une structure composée de "blocs" ou "briques" juxtaposables et superposables, chaque "bloc" ou "brique" étant toutefois très ajouré, et rempli par exemple de terreau dans lequel peuvent se développer les racines des végétaux plantés. Les casiers, ainsi réalisés et placés les uns à côté des autres et au-dessus des autres, sont assemblés entre eux par exemple au moyen de vis reliant de façon démontable leurs châssis respectifs. L'amovibilité de la face avant des casiers permet la mise en place aisée de composants intérieurs, tels que les réseaux d'eau et d'air et leurs supports, comme détaillé ci-après.

Selon une disposition préférentielle, la face avant et la face arrière de chaque casier sont tapissées intérieurement d'une nappe ou toile, éventuellement pourvue de perforations ou d'entailles, au travers de laquelle peuvent être plantés et se développer les végétaux. Cette nappe ou toile, constituant un genre de "paillage", peut remplir divers rôles : retenue du terreau, rétention d'eau ou d'humidité, protection, guide visuel pour la plantation des végétaux selon un motif préétabli, décoration, support d'éclairage par exemple par fibres optiques, etc.

La structure pour mur végétalisé, objet de la présente invention, a pour caractéristique essentielle l'incorporation d'un réseau de conduits d'eau, et le cas échéant aussi d'un réseau de drains d'air, qui s'étendent dans l'épaisseur des différents casiers, en traversant les plans de joint horizontaux et/ou verticaux entre casiers adjacents, ce qui est rendu possible par le fait que les faces inférieure, supérieure et latérales de tous les casiers sont ajourées. La mise en place de ces réseaux est ainsi facilitée, de même que l'introduction initiale et le remplacement ultérieur du terreau, l'ensemble des volumes intérieurs des casiers formant en quelque sorte un volume unique non cloisonné Les réseaux d'eau et d'air peuvent être ramifiés, ou conformés en boucles pour éviter les pertes de charge et assurer une meilleure régularité des débits, des pompes appropriées mettant l'eau en circulation ou pulsant l'air. Dans la mesure où les réseaux d'eau et d'air possèdent des conduits horizontaux, qui répartissent l'eau et l'air dans des casiers juxtaposés, la structure comprend encore, avantageusement, des berceaux accrochés à une face des casiers, telle que la face arrière grillagée ou maillée, qui soutiennent chacun un tronçon horizontal correspondant de conduit d'eau ou d'air, en positionnant ce conduit dans l'épaisseur d'un casier. En particulier, les réseaux d'eau et d'air peuvent posséder des conduits horizontaux parallèles et superposés, traversant les mêmes casiers, auquel cas les berceaux de soutien de tronçons superposés de ces conduits peuvent être réunis en un élément rigide unique de conformation en "U", qui rigidifie l'ensemble et empêche tout basculement ou écrasement des conduits.

Dans l'ensemble, la structure pour mur végétalisé, objet de l'invention, possède les avantages suivants :

Les casiers de cette structure, à conformation très ajourée en raison de leurs faces toutes grillagées ou maillées ou ajourées, sont des éléments légers, facilement transportables et manipulables, et aisément installés.

Toutefois, rigidifiés par leur châssis et leur assemblage, ces casiers permettent de constituer une structure rigide et autoporteuse, même sur une grande hauteur. En particulier, cette structure ne nécessite pas d'être soutenue par un mur en maçonnerie.

En conséquence de ce qui précède, la structure pour mur végétalisé objet de l'invention est autonome et peut être installée en tout lieu, ce qui multiplie considérablement ses possibilités d'application. Si elle est installée à distance de tout mur de maçonnerie, ou autre obstacle, la structure pour mur végétalisé objet de l'invention peut recevoir des végétaux sur ses deux faces principales, respectivement avant ou arrière, pour constituer un genre de haie.

Les casiers constituent un système de mur végétalisé modulaire, qui peut être adapté à n'importe quelles formes et dimensions souhaitées. Grâce à cette structure modulaire démontable, des parties endommagées peuvent être éventuellement remplacées de façon simple et rapide, par substitution de casiers.

En raison de son caractère modulaire, et de la légèreté de ses composants, cette structure pour mur végétalisé peut, si cela est souhaité, être aisément démontée et déplacée d'un lieu d'implantation à un autre, ce qui ouvre la voie à des utilisations intéressantes, en particulier comme palissade de chantier à caractère temporaire.

La structure grillagée ou maillée ou ajourée permet le libre passage des réseaux d'eau et d'air, d'un casier à un casier adjacent, sans nécessité de raccords de tuyauterie entre les casiers adjacents, ce qui simplifie la fabrication et l'installation de l'ensemble. Les berceaux assurent le positionnement précis des conduits de ces réseaux.

Grâce à leur configuration grillagée ou maillée, les casiers peuvent, si cela est souhaité, être cintrés pour créer des murs végétalisés de formes courbes, soit afin de suivre un tracé particulier, soit en vue de créer des effets de relief ou d'épaisseur variable, par exemple en formant des zones bombées sur les faces avant des casiers.

Les faces avant des casiers, étant amovibles, permettent (le cas échéant après enlèvement partiel du terreau) un accès aisé aux réseaux d'eau et d'air, pour des interventions sur ces réseaux, sans opérations de démontage.

Ainsi, le coût d'entretien de cette structure pour mur végétalisé est réduit.

Grâce à la présence des réseaux d'eau et d'air, le mur végétalisé est irrigué et aéré, d'une manière régulièrement répartie, et il assure lui-même la dépollution de l'air, notamment avec utilisation d'un substrat filtrant avec additif bactérien. L'irrigation peut être rendue automatique, et elle peut constituer une fonction entièrement autonome, si l'on prévoit une pompe alimentée par l'énergie solaire, et une utilisation d'eau pluviale récupérée par exemple dans une citerne.

Enfin, la structure objet de l'invention permet de réaliser une couverture végétale continue et complète, sans interruption au niveau de la jonction entre des casiers juxtaposés ou superposés. La plantation des végétaux se fait directement sur les éléments du mur, sans contrainte particulière de plantation concernant notamment la densité des végétaux, et permet d'avoir des plantes montantes ou retombantes. Les végétaux peuvent être aisément changés, sur la structure elle-même.

L'invention sera mieux comprise à l'aide de la description qui suit, en référence au dessin schématique annexé représentant, à titre d'exemples, des formes d'exécution de cette structure pour mur végétalisé.
Figure 1 est une vue en perspective, partiellement éclatée, d'une structure pour mur végétalisé conforme à la présente invention ;
Figure 2 représente, en coupe verticale, un détail de deux casiers superposés de cette structure pour mur végétalisé ;
Figure 3 montre, en vue de face avec coupe partielle, une variante de la structure de mur végétalisé objet de l'invention ;
Figure 4 est une vue en coupe verticale correspondant à la figure 3.

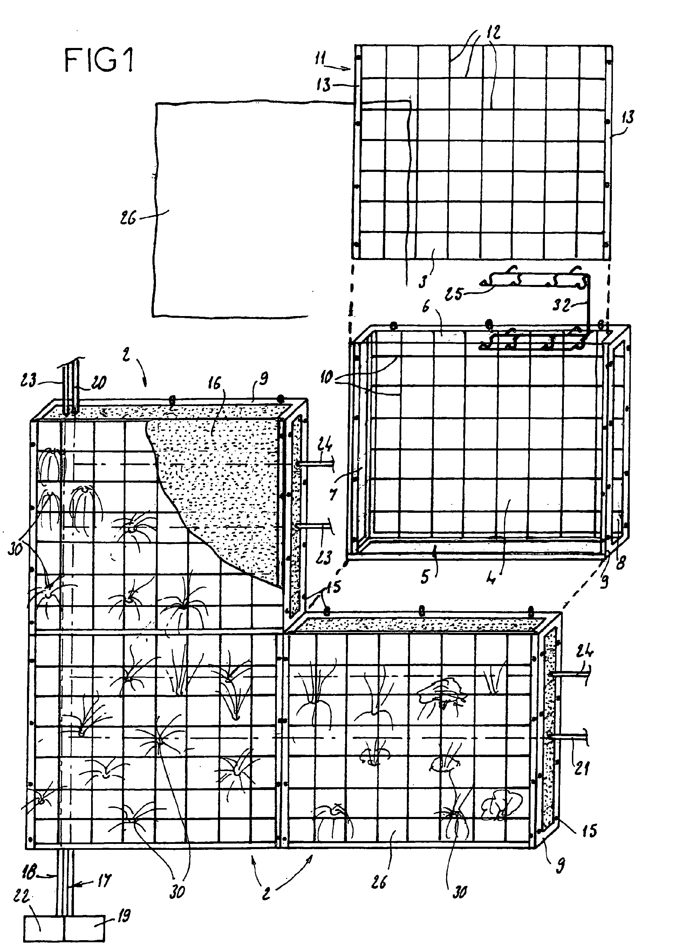

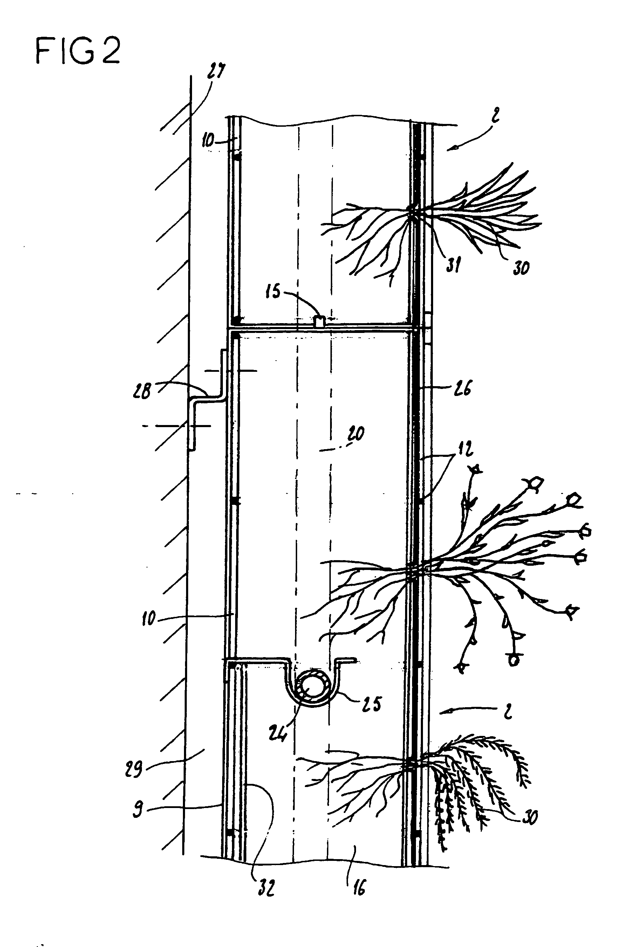

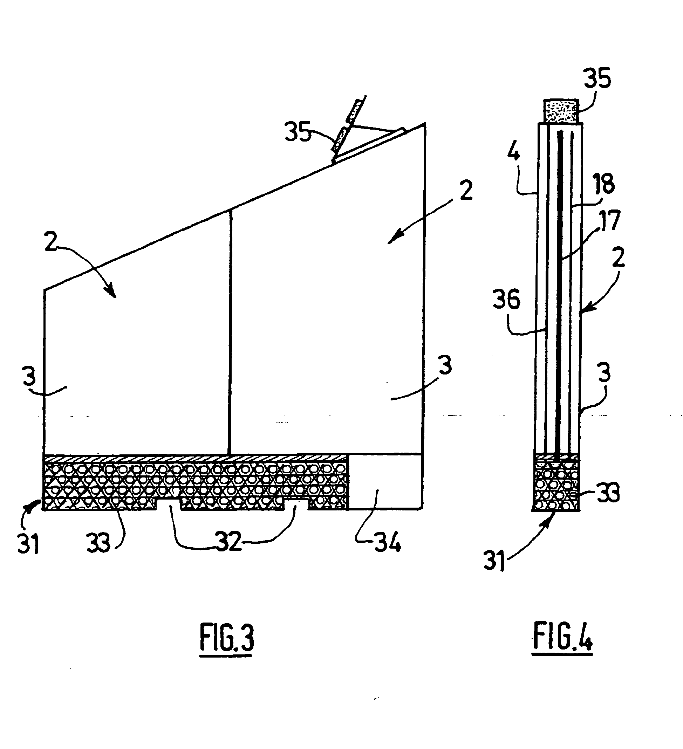

Comme le montre la figure 1, la structure pour mur végétalisé est composée de casiers 2 identiques entre eux, qui sont juxtaposés et superposés, pour constituer un ensemble de longueur et de hauteur souhaitées.

Chaque casier 2 possède une forme générale parallélépipédique, de relativement faible épaisseur, dans laquelle on distingue une face avant 3, une face arrière 4, une face inférieure 5, une face supérieure 6 et deux faces latérales 7 et 8, respectivement gauche et droite, toutes ces faces étant rectangulaires.

Le casier 2 possède un châssis 9, dont les éléments du genre barres ou cornières s'étendent suivant les arêtes de la forme parallélépipédique. Entre les éléments du châssis 9 sont tendus des fils métalliques 10, qui forment un grillage ou maillage, présent sur la face arrière 4, la face inférieure 5, la face supérieure 6 et éventuellement les deux faces latérales 7 et 8. Toutefois, dans la mesure où les faces inférieure 5, supérieure 6 et latérales 7 et 8 sont de faible largeur, celles-ci peuvent aussi être simplement ajourées, sans la présence d'un grillage.

La face avant 3 du casier 2 est constituée par un cadre amovible 11, sur lequel est tendu un grillage ou maillage 12 en fils métalliques. Le cadre 11 possède en particulier des montants latéraux 13, prévus pour être fixés de façon amovible sur les côtés du châssis 9 du casier 2, au moyen de vis 14.

D'autres vis 15 sont prévues pour relier, de façon démontable, les châssis 9 respectifs des casiers 2 placés les uns à côté des autres, et au-dessus des autres. On obtient ainsi une structure verticale autoporteuse.

Les casiers 2, ainsi constitués, sont réalisables notamment en acier galvanisé, tant pour leur châssis 9 que pour les fils 10 et 12 des grillages ou maillages.

Ces casiers 2 sont prévus pour être remplis d'un substrat de plantation 16, tel que terreau, tourbe, gravier, roches, etc. L'amovibilité de la face avant 3 des casiers 2 facilite la mise en place du substrat de plantation 16.

Dans l'épaisseur des casiers 2, donc à l'intérieur du substrat de plantation 16, sont noyés un réseau 17 de conduits d'eau, et un réseau 18 de drains d'air.

Le réseau d'eau 17, qui permet d'irriguer le mur végétalisé, comprend une pompe 19 située à la base de ce mur, qui alimente un conduit d'eau vertical 20 auquel sont raccordés des conduits d'eau horizontaux 21, situés à plusieurs niveaux, qui irriguent les différents casiers 2.

De manière similaire, le réseau d'air 18 comprend une pompe 22 située à la base du mur, qui alimente un conduit d'air vertical 23 auquel sont raccordés des drains d'air horizontaux 24, situés à plusieurs niveaux, qui aèrent les différents casiers 2.

En particulier, dans chaque rangée horizontale de casiers 2, peuvent être présents un conduit d'eau horizontal 21 et un drain d'air horizontal 24 superposés, qui traversent les plans de joint verticaux entre casiers 2 adjacents, ce qui est permis par les faces latérales 7 et 8 ajourées de ces casiers 2. Dans chaque casier 2, des berceaux 25 de forme adaptée sont accrochés à la face arrière 4, et soutiennent chacun un tronçon correspondant du conduit d'eau horizontal 21 ou du drain d'air horizontal 24. Deux berceaux 25 superposés sont avantageusement reliés par une barrette de liaison verticale 32, de manière à constituer un élément rigide unique, conformé en "U".

La face avant 3 et la face arrière 4 de chaque casier 2 sont recouvertes intérieurement d'une nappe ou toile 26, fixée par exemple par agrafage ou par collage, qui assure la retenue du substrat de plantation 16.

Dans une utilisation possible, illustrée par la figure 2, la structure de mur végétalisé est érigée en avant d'un mur en maçonnerie 27 appartenant par exemple à un bâtiment, et des entretoises 28 maintiennent ladite structure à distance du mur en maçonnerie 27, en créant une lame d'air intermédiaire 29 qui isole phoniquement et thermiquement le mur 27 et qui empêche les infiltrations d'eau et d'humidité, d'autant plus que les entretoises 28 ne nécessitent pas d'ancrage profond dans le mur 27.

En considérant toujours l'exemple d'utilisation de la figure 2, des plantes 30 sont mises en place, au travers de perforations ou d'entailles 31 de la nappe ou toile 26, de manière à ce que leurs racines se développent dans le substrat de plantation 16, irrigué par les conduits d'eau 21 et aéré par les drains d'air 24. Des poches peuvent être ménagées dans la nappe ou toile 26, pour diriger la croissance des plantes 30, par exemple vers le haut.

Comme on le conçoit aisément, en supposant que la structure pour mur végétalisé ne soit pas placée devant un mur, il devient possible d'utiliser cette structure avec des végétaux plantés sur les faces avant 3 et aussi sur les faces arrière 4 des casiers 2, les faces arrière 4 étant, dans ce cas, recouvertes elles aussi d'une toile.

Alors que les figures 1 et 2 représentent une structure de mur végétalisé essentiellement fixe, les figures 3 et 4 illustrent une variante qui consiste en une structure analogue mais mobile, autrement dit transportable d'un lieu d'utilisation à un autre, ou encore vers un lieu de stockage intermédiaire entre deux utilisations successives. La structure est ici composée de deux casiers 2 juxtaposés, portés par un socle 31 qui peut être monté sur des roulettes (non représentées), et qui comporte avantageusement des encoches 32 permettant sa manutention à l'aide d'un chariot élévateur à fourches. Pour rendre une telle structure transportable et autonome, le socle 31 peut renfermer une réserve d'eau 33, avec une pompe immergée 34, qui alimente le réseau d'eau des casiers 2. Un panneau photovoltaïque 35 associé à une batterie, constituant une source et réserve d'énergie électrique autonome, fournit sur une ligne électrique 36 l'énergie nécessaire au fonctionnement de la pompe d'irrigation 34, et le cas échéant à l'alimentation d'autres fonctions auxiliaires électriques, en particulier d'un éclairage. Une telle réalisation convient, en particulier, à la décoration évènementielle, donc provisoire.

Bien que les faces inférieure 5, supérieure 6 et latérales 7,8 des casiers 2 soient ajourées, selon le principe même de l'invention, il reste possible de créer, à l'intérieur du volume de la structure de mur végétalisé, des séparations partielles situées à des niveaux intermédiaires, qui sont prévues pour retenir le substrat de plantation 16. Ainsi, en particulier dans le cas d'une structure de grande hauteur, on évite le tassement du substrat de plantation, et l'on conserve une densité de substrat sensiblement homogène sur toute la hauteur de la structure.

Compte tenu de ses possibilités d'utilisation, la structure pour mur végétalisé, objet de l'invention, peut trouver des applications nombreuses et diversifiées :
■ embellissement urbain, en particulier habillage et/ou dissimulation de pignons et autres murs d'immeubles ;
■ écrans anti-bruit ;
■ protection contre le vent, les intempéries et l'ensoleillement ;
■ protection contre le vandalisme ;
■ murets de séparation, pour voies de circulation routière ou pour pistes cyclables ;
■ palissades de chantier, mettant à profit le caractère démontable et transportable de cette structure de mur végétalisé ;
■ décoration pour les installations provisoires, telles que stands d'exposition ou analogues,
■ haies et barrières, par exemple pour jardins, ou plus spécifiquement pour la réalisation de barrières de sécurité entourant le bassin d'une piscine ;
■ réalisation de labyrinthes végétaux.

Comme il va de soi, et comme il ressort de ce qui précède, l'invention ne se limite pas aux seules formes d'exécution de cette structure pour mur végétalisé qui ont été décrites ci-dessus, à titre d'exemples ; elle en embrasse, au contraire, toutes les variantes de réalisation et d'application respectant le même principe, dans le cadre des revendications annexées. C'est ainsi, notamment, que l'on ne s'éloignerait pas du cadre de l'invention :
■ en modifiant les formes, dimensions et matières des casiers, notamment en formant des casiers non pas parallèlépipédiques mais à pans inclinés, pour adaptation à certaines utilisations ;
■ en créant des fenêtres ou ajours, dans les casiers ou entre ceux-ci ;
■ en utilisant tous moyens pour l'assemblage de ces casiers entre eux ;
■ en donnant une autre configuration, par exemple en boucle, aux réseaux d'eau et d'air ;
■ en concevant le réseau d'air non pas comme un réseau d'aération du substrat et des racines, avec des conduits percés, mais comme un simple échangeur thermique avec des tuyaux d'air à surface pleine, servant de rafaîchisseur d'air pour des locaux, les deux possibilités ici indiqués peuvent être éventuellement combinées dans un même mur végétalisé ;
■ en ajoutant, sur la ou les faces visibles de la structure, des toiles extérieures d'habillage et d'embellissement ;
■ en ajoutant tous aménagements complémentaires, par exemple des dispositifs d'arrosage ou de brumisation ou d'éclairage, ou des systèmes de dépollution de l'air à charbons actifs ou autres produits appropriés, sur cette structure pour mur végétalisé ;
■ en destinant la même structure à toute utilisation, extérieure ou intérieure.

## Revendications

1. Structure pour mur végétalisé, composée de casiers (2) de forme générale prismatique, prévus pour être juxtaposés et/ou superposés, les casiers (2) adjacents étant assemblés entre eux, chaque casier (2) possédant des faces grillagées ou maillées (3 à 8), et les casiers (2) étant prévus pour être remplis d'un substrat de plantation (16), tel que terreau, **caractérisée en ce que** les faces inférieure (5), supérieure (6) et latérales (7,8) des casiers (2) sont ajourées, et **en ce qu'**elle reçoit un réseau (17) de conduits d'eau, et le cas échéant aussi un réseau (18) de drains d'air, réseaux (17,18) qui s'étendent dans l'épaisseur des différents casiers (2) juxtaposés et/ou superposés, donc à l'intérieur du substrat de plantation (16), en traversant les plans de joint horizontaux et/ou verticaux entre casiers (2) adjacents.

2. Structure pour mur végétalisé selon la revendication 1, **caractérisée en ce que** chaque casier (2) possède un châssis (9) supportant des faces grillagées ou maillées ou ajourées fixes, respectivement inférieure (5), supérieure (6), latérales (7, 8) et arrière (4), tandis que la face avant (3) du casier (2) est constituée par un cadre grillagé ou maillé amovible (11, 12).

3. Structure pour mur végétalisé selon la revendication 2, **caractérisée en ce que** les casiers (2), placés les uns à coté des autres et au-dessus des autres, sont assemblés entre eux au moyen de vis (15) reliant de façon démontable leurs châssis (9) respectifs.

4. Structure pour mur végétalisé selon la revendication 3, **caractérisée en ce que** le cadre grillagé ou maillé (11, 12) de la face avant (3) de chaque casier (2) est fixé de façon amovible au châssis (9) de ce casier au moyen d'autres vis (14).

5. Structure pour mur végétalisé selon l'une quelconque des revendications 1 à 4, **caractérisée en ce que** la face avant (3) et la face arrière (4) de chaque casier (2) sont tapissées intérieurement d'une nappe ou toile (26), éventuellement pourvue de perforations ou d'entailles (31), au travers de laquelle peuvent être plantés et se développer les végétaux (30).

6. Structure pour mur végétalisé selon l'une quelconque des revendications 1 à 5, **caractérisée en ce que**, dans la mesure où les réseaux (18, 19) d'eau et d'air possèdent des conduits horizontaux (21, 24), cette structure comprend des berceaux (25) accrochés à une face des casiers (2), telle que la face arrière (4) grillagée ou maillée, qui soutiennent chacun un tronçon horizontal correspondant de conduit d'eau (21) ou d'air (24), en positionnant ce conduit dans l'épaisseur d'un casier (2).

7. Structure pour mur végétalisé selon la revendication 6, **caractérisée en ce que** les réseaux (18, 19) d'eau et d'air possèdent des conduits horizontaux parallèles et superposés (21, 24), traversant les mêmes casiers (2), et **en ce que** les berceaux (25) de soutien de tronçons superposés de ces conduits (21, 24) sont réunis (32) en un élément rigide unique de conformation en "U".

8. Structure pour mur végétalisé selon l'une quelconque des revendications 1 à 7, **caractérisée en ce qu'**elle est conçue comme une structure mobile ou transportable.

9. Structure pour mur végétalisé selon l'une quelconque des revendications 1 à 8, **caractérisée en ce qu'**elle comporte, à l'intérieur de son volume, des séparations partielles situées à des niveaux intermédiaires, prévues pour retenir le substrat de plantation (16).

## Claims

1. A structure for a planted wall, made up of boxes of prismatic general shape designed to be juxtaposed and/or superposed, adjacent boxes (2) being joined together, each box (2) possessing wire-netting or chain-link faces (3 to 8) , and the boxes (2) being designed to be filled with a planting substrate (16) such as compost, this structure being **characterized in that** the bottom (5), top (6) and side (7, 8) faces of the boxes (2) are perforated, and **in that** the structure accommodates a network (17) of water pipes, and optionally also a network (18) of air drains, which networks (17, 18) run within the thickness of the various juxtaposed and/or superposed boxes (2) , and thus within the planting substrate (16) and across the horizontal and/or vertical parting plane between adjacent boxes (2).

2. The structure for a planted wall as claimed in claim 1, **characterized in that** each box (2) has a structural frame (9) supporting fixed wire-netting or chain-link faces, variously at the bottom (5), at the top (6), at the sides (7, 8) and at the rear (4), while the front face (3) of the box (2) is a removable subframe of wire netting or chain link (11, 12)

3. The structure for a planted wall as claimed in claim 2, **characterized in that** the boxes (2) , placed side by side and on top of each other, are joined together by means of screws (15) which detachably connect their respective structural frames (9).

4. The structure for a planted wall as claimed in claim 3, **characterized in that** the wire-netting or chain-link subframe (11, 12) of the front face (3) of each box (2) is fixed removably to the structural frame (9) of this box by means of other screws (14).

5. The structure for a planted wall as claimed in any one of claims 1 to 4, **characterized in that** the front face (3) and the rear face (4) of each box (2) are lined internally with a mat or fabric (26) , optionally with perforations or slits (31), through which the plants (30) can be planted and can develop.

6. The structure for a planted wall as claimed in any one of claims 1 to 5, **characterized in that**, insofar as the water and air networks (18, 19) possess horizontal pipes (21, 24) , this structure comprises cradles (25) hooked to one face of the boxes (2) , such as the rear wire-netting or chain-link face (4), which each support a corresponding horizontal length of water pipe (21) or air pipe (24), in such a way as to position this pipe in the thickness of a box (2).

7. The structure for a planted wall as claimed in claim 6, **characterized in that** the water and air networks (18, 19) possess parallel superposed horizontal pipes (21, 24) running through the same boxes (2), and **in that** the cradles (25) supporting the superposed lengths of these pipes (21, 24) are connected (32) to form a single rigid U-shaped part.

8. The structure for a planted wall as claimed in any one of claims 1 to 7, **characterized in that** it is designed as a mobile or transportable structure.

9. The structure for a planted wall as claimed in any one of claims 1 to 8, **characterized in that** within its volume it comprises partial separations situated at intermediate levels to retain the planting substrate (16).

## Patentansprüche

1. Struktur für eine bepflanzbare Mauer, zusammengesetzt aus Gefachen (2) in allgemein prismatischer Form, die dafür vorgesehen sind, nebeneinander und/oder übereinander gesetzt zu werden, wobei die benachbarten Gefache (2) miteinander verbunden sind, und wobei jedes Gefach (2) vergitterte oder mit Maschengewebe überzogene Seiten (3 bis 8) aufweist, und wobei die Gefache (2) dazu bestimmt sind, mit einem Pflanzsubstrat (16), wie Gartenerde, gefüllt zu werden, **dadurch gekennzeichnet, dass** die Unterseite (5), die Oberseite (6) und die Seitenflächen (7, 8) der Gefache (2) durchbrochen sind, und **dadurch**, dass die Struktur ein Netz (17) von Wasserleitungen aufnimmt, und, falls erforderlich, auch ein Netz (18) von Belüftungsrohren, Netze, (17, 18) die im Inneren der verschiedenen nebeneinander und/oder übereinander gesetzten Gefache (2) verlaufen, demnach im Inneren des Pflanzsubstrats (16), wobei sie die horizontalen und/oder vertikalen Formteilungsflächen zwischen benachbarten Gefachen (2) durchqueren.

2. Struktur für eine bepflanzbare Mauer nach Anspruch 1, **dadurch gekennzeichnet, dass** jedes Gefach (2) einen Unterbau (9) hat, der feste vergitterte oder mit Maschengewebe überzogene oder durchbrochene Seiten trägt, und zwar jeweils eine untere (5), eine obere (6), zwei seitliche (7, 8) und eine rückwärtige (4), während die Vorderseite (3) des Gefachs (2) von einem herausnehmbaren vergitterten oder mit Maschengewebe überzogenen Rahmen (11, 12) gebildet wird.

3. Struktur für eine bepflanzbare Mauer nach Anspruch 2, **dadurch gekennzeichnet, dass** die Gefache (2), die nebeneinander und übereinander angeordnet sind, mittels Schrauben (15) untereinander verbunden sind, die jeweils ihre Unterbauten (9) demontierbar verbinden.

4. Struktur für eine bepflanzbare Mauer nach Anspruch 3, **dadurch gekennzeichnet, dass** der vergitterte oder mit Maschengewebe überzogene Rahmen (11, 12) der Vorderseite (3) jedes Gefachs (2) abnehmbar am Unterbau (9) dieses Gefachs mittels anderer Schrauben (14) befestigt ist.

5. Struktur für eine bepflanzbare Mauer nach einem der Ansprüche 1 bis 4, **dadurch gekennzeichnet, dass** die Vorderseite (3) und die Rückseite (4) jedes Gefachs (2) innen mit einem Vlies oder einem Gewebe (26) ausgekleidet sind, das eventuell mit Löchern oder Einschnitten (31) versehen ist, durch die hindurch Pflanzen (30) eingesetzt werden und sich entwickeln können.

6. Struktur für eine bepflanzbare Mauer nach einem der Ansprüche 1 bis 5, **dadurch gekennzeichnet, dass** diese Struktur, soweit die Leitungsnetze für Wasser und Belüftung (18, 19) waagrechte Leitungen (21, 24) haben, Halter (25) umfasst, die an einer Seite der Gefache (2), wie etwa der vergitterten oder mit Maschengewebe überzogenen Rückseite (4), eingehakt sind und die jeweils einen entsprechenden horizontalen Abschnitt der Wasserleitung (21) oder der Belüftungsleitung (24) abstützen, wodurch diese Leitungen im Inneren eines Gefachs (2) positioniert werden.

7. Struktur für eine bepflanzbare Mauer nach Anspruch 6, **dadurch gekennzeichnet, dass** die Wasser- und Belüftungs-Leitungsnetze (18, 19) parallele und übereinander liegende horizontale Leitungen (21, 24) haben, die die gleichen Gefache (2) durchqueren, und **dadurch**, dass die Halter (25) zum Abstützen der übereinander liegenden Abschnitte dieser Leitungen (21, 24) in einem einzigen starren U-förmigen Element vereinigt (32) sind.

8. Struktur für eine bepflanzbare Mauer nach einem der Ansprüche 1 bis 7, **dadurch gekennzeichnet, dass** sie als bewegliche oder transportierbare Struktur konzipiert ist.

9. Struktur für eine bepflanzbare Mauer nach einem der Ansprüche 1 bis 8, **dadurch gekennzeichnet, dass** sie im Innenraum Teilabtrennungen aufweist, die auf Zwischenebenen liegen und vorgesehen sind, um das Pflanzsubstrat (16) fest, zu halten.
